# EUROPÄISCHE PATENTSCHRIFT

(11) **EP 0 898 878 B1**
(45) Veröffentlichungstag und Bekanntmachung des Hinweises auf die Patenterteilung: **07.11.2001**
(21) Anmeldenummer: 98114683.0
(22) Anmeldetag: 05.08.1998
(51) Int. Cl.: A01G 13/02

(54) **Verbindungsvorrichtung für Hagelschutznetze**
Connecting device for nets protecting against hail
Dispositif de liaison pour des filets contre la grêle

(30) Priorität: 27.08.1997 DE 19737228
(43) Veröffentlichungstag der Anmeldung: 03.03.1999
(73) Patentinhaber: WLZ Raiffeisen AG, 70176 Stuttgart (DE)
(72) Erfinder: Holzwarth, Rudolf, 88255 Baindt (DE)
(74) Vertreter: Pfiz, Thomas, Dr.

(56) Entgegenhaltungen:
- EP-A- 0 481 870
- DE-A- 19 616 051
- FR-A- 2 509 810
- US-A- 4 038 726

## Beschreibung

Die Erfindung betrifft eine Verbindungsvorrichtung für Hagelschutznetze, welche mehrere zur reihenweisen Abdeckung von Obstkulturen seitlich nebeneinander aufspannbare Netzbahnen aufweisen, mit zwei an den einander paarweise benachbarten Netzrändern der Netzbahnen verankerbaren, jeweils aus einem Lochplattenteil und einem über breitseitig abstehende, durch Netzmaschenöffnungen hindurchgreifende Zapfen mit dem Lochplattenteil unter Einklemmen eines der zu verbindenden Netzränder zusammenfügbaren Zapfenplattenteil bestehenden Halteplatten, die lösbar miteinander verbindbar sind und im Verbindungszustand mit einer Breitseite als Verbindungsseite gegeneinander weisen.

Hagelschutznetze dienen dazu, Sonderkulturen wie Kernobstbäume bei Hagelunwettern vor Frucht- und Holzschäden zu bewahren. Hierzu werden einzelne Netzbahnen in Form eines Giebel- oder Flachdaches über den Baumreihen aufgespannt und an ihren längsseitigen Netzrändern im Traufenbereich an im Abstand voneinander angeordneten Verbindungsstellen miteinander verbunden. Damit werden Hagelkörner auf der Oberseite des Netzes aufgefangen und schwerkraftbedingt durch die Traufenschlitze zwischen den Verbindungsstellen in die Freiräume zwischen den Baumreihen entleert. Am Ende der Vegetationsperiode müssen die Verbindungen gelöst und die Netzbahnen aufgerollt werden, um Netzschäden durch Schneelast zu verhindern. Bei der gattungsgemäßen Verbindungsvorrichtungen ist es bekannt, die Zapfen- und Lochplattenteile durch Preßverformung der Zapfenenden miteinander zu verbinden. Die Verbindung der Halteplatten erfolgt nach Art einer Bajonettverbindung durch axiales Zusammenstecken und anschließendes Verdrehen von Verbindungsmitteln, die an den einander zugewandten Zapfenplattenteilen angeformt sind. Als nachteilig hierbei wird angesehen, daß die Stabilität und Zugfestigkeit der Verbindung nicht ausreicht, um über lange Zeiträume die bei Belastung des Netzes auftretenden hohen Zugkräfte sicher aufzunehmen. Hinzu kommt der beträchtliche Arbeitsaufwand bei der Netzbefestigung der Halteplatten, wobei die Zapfen beim Verpressen häufig brechen.

Ausgehend hiervon liegt der Erfindung die Aufgabe zugrunde, eine Verbindungsvorrichtung der eingangs angegebenen Art dahingehend zu verbessern, daß eine dauerhaft sichere und dennoch leicht lösbare Verbindung bei einfacher Bauweise und geringem Montageaufwand erreicht wird.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, die auftretenden Zugkräfte an den voneinander abgewandten Rückseiten der Halteplatten einzuleiten. Um dies zu ermöglichen, ist gemäß der Erfindung ein mit seinen freien Enden von der Verbindungsseite der Halteplatten her durch jeweils einen zentralen Querdurchbruch der Halteplatten hindurchsteckbarer Verbindungsbolzen vorgesehen. Zur Erleichterung der Montage ist der Verbindungsbolzen im Verbindungszustand durch an den voneinander abgewandten Rückseiten der Halteplatten angeordnete Rastmittel verschiebefest verrastet.

In einer besonders im Hinblick auf die Zugefestigkeit und Lösbarkeit der Verbindung vorteilhaften Ausführung sind die Rastmittel durch jeweils eine an den Rückseiten der Halteplatten befestigbare Spreizspange gebildet, die mit ihren beim Durchstecken des Verbindungsbolzens gegeneinander aufspreizbaren Rastschenkeln in Rastausnehmungen des Verbindungsbolzens formschlüssig eingreift. Vorteilhafterweise bestehen die Spreizspangen aus U-förmig gebogenem Federstahl-Drahtmaterial.

Um die Befestigung der Spreizspangen auf einfache Weise zu ermöglichen, können diese durch zwei an den Rückseiten der Halteplatten im Abstand voneinander angeformte Flanschstücke gehalten sein, wobei die zwischen den Flanschstücken verlaufenden Abschnitte der Rastschenkel den Querdurchbruch der Halteplatten an gegenüberliegenden Randbereichen übergreifen, um in Eingriff mit dem Verbindungsbolzen zu kommen. In einer baulich vorteilhaften Ausgestaltung weisen die Flanschstücke einen an der Rückseite der Halteplatten abstehenden Tragsteg und einen in T-förmiger Anordnung quer zu dem Tragsteg sich erstreckenden Stützteller auf, wobei die Spreizspangen unter beidseitiger Umgreifung der Tragstege zwischen der Rückseite der Halteplatten und den Stütztellern einführbar sind. Zur Sicherung der Spreizspangen können die Halteplatten mindestens eine an ihrer Rückseite abstehende Rastnase aufweisen, welche die Spreizspange an ihrem die Rastschenkel verbindenden Quersteg in einer Montagestellung gegenüber einem Flanschstück arretiert.

In einer vorteilhaften Ausgestaltung wird das Einrasten bzw. Einspreizen der Spreizspange dadurch erreicht, daß der Verbindungsbolzen zu seinen freien Enden hin vorzugsweise spitzwinklig aufeinander zulaufende Anlaufschrägen aufweist, die durch die Rastausnehmungen hinterschnitten sind.

In einer besonders bevorzugten Ausführung ist der Verbindungsbolzen an einer ersten der beiden Halteplatten drehfest gehalten und an der zweiten Halteplatte um seine Längsachse drehbar und dabei aus seiner Raststellung lösbar gelagert. Dies läßt sich dadurch realisieren, daß der Verbindungsbolzen aus einem vorzugsweise aus Edelstahl bestehenden Flachmaterial gebildet ist, daß die erste Halteplatte einen an den Querschnitt des Verbindungsbolzens angepaßten Schlitz als Querdurchbruch aufweist, und daß der Querdurchbruch der zweiten Halteplatte durch eine den Verbindungsbolzen aufnehmende Bohrung gebildet ist.

Vorteilhafterweise weisen die Halteplatten an ihren Verbindungsseiten überstehende, den Verbindungsbolzen umgreifende Hülsen auf, die im Verbindungszustand mit ihren freien Stirnflächen auf Stoß gegeneinander anliegen und damit insbesondere als Abstandshalter und Drehlager dienen. Dabei ist es weiter von Vorteil, wenn die Hülse an der zweiten Halteplatte als Drehführung für den Verbindungsbolzen den Querdurchbruch begrenzt.

Herstellungstechnisch ist es günstig, wenn der Lochplattenteil und der Zapfenplattenteil der Halteplatten als einstückige Formteile aus Kunststoff ausgebildet sind.

Gemäß einer weiteren Variante der Erfindung sind die Lochplattenteile und Zapfenplattenteile der Halteplatten über an ihren Seitenrändern angeordnete, paarweise einander zugeordnete Verbindungselemente miteinander verbindbar, wobei die Verbindungselemente an einem Seitenrand als Scharnierverbindung gelenkig miteinander verbindbar sind und an dem gegenüberliegenden Seitenrand als Rastverbindung miteinander verrastbar sind.
Damit lassen sich die Plattenteile auf besonders einfache und zugleich zuverlässige Weise an den zugeordneten Netzrändern montieren.

Die Verbindungselemente können durch Laschen und in Öffnungen der Laschen eingreifende Hakenzungen und Rastzungen gebildet sein.

Zur Vereinfachung der Netzmontage ist es vorteilhaft, wenn die Laschen in Richtung der Zapfen über die Zapfenplattenteile überstehen und zu ihren freien Enden hin spitzwinklig zulaufende, durch die Maschenöffnungen des Netzes hindurchsteckbare Ansätze aufweisen. Eine weitere montagetechnische Vereinfachung ergibt sich dadurch, daß die Verbindungselemente an den Längsseitenrändern der im Umriß rechteckigen Lochplattenteile und Halteplattenteile im Abstand voneinander angeordnet sind, wobei die Längsseitenränder im Verbindungszustand parallel zu den Netzrändern ausgerichtet sind.

Um das Zusammenklappen der über die Hakenzungen gelenkig verbundenen Plattenteile nicht zu behindern, können die Zapfen im Bereich der Scharnierverbindung gegenüber den übrigen Zapfen verkürzt ausgebildet sein.

Eine weitere Variante der Erfindung sieht vor, daß die Zapfenplattenteile im Verbindungszustand der Halteplatten voneinander abgewandt sind. Dadurch wird sichergestellt, daß die auftretenden Zugkräfte die Netzränder gegen die Zapfenplattenteile als Widerlager ziehen, so daß sich die Netzränder auch bei einer losen Verbindung der Plattenteile nicht in Richtung der freien Enden der die Maschenöffnungen durchgreifenden Zapfen von diesen lösen können.

Im folgenden wird die Erfindung anhand eines in der Zeichnung in schematischer Weise dargestellten Ausführungsbeispiels näher erläutert. Es zeigen
- Fig. 1 bis 3: einen Zapfenplattenteil einer ersten Halteplatte der erfindungsgemäßen Verbindungsvorrichtung in den Breitseitenansichten und einer Längsseitenansicht;
- Fig. 4 und 5: einen mit dem Zapfenplattenteil nach Fig. 1 bis 3 verbindbaren Lochplattenteil der ersten Halteplatte in den Breitseitenansichten;
- Fig. 6: die aus dem Zapfenplattenteil und Lochplattenteil zusammengefügte erste Halteplatte in einer Längsseitenansicht;
- Fig. 7 bis 11: eine den Fig. 1 bis 6 entsprechende Darstellung eines Zapfenplattenteils und Lochplattenteils einer zweiten Halteplatte der erfindungsgemäßen Verbindungsvorrichtung;
- Fig. 12: die aus dem Zapfenplattenteil und Lochplattenteil nach Fig. 1 bis 6 zusammengefügte erste Halteplatte in einer Fig. 7 entsprechenden Darstellung;
- Fig. 13: 3 eine Breitseitenansicht eines Verbindungsbolzens zur Verbindung der ersten und zweiten Halteplatte;
- Fig. 14: die erfindungsgemäße Verbindungsvorrichtung im Verbindungszustand der ersten und zweiten Halteplatte in einer Schmalseitenansicht; und
- Fig 15: ein mittels der Verbindungsvorrichtungen an Verbindungsstellen seiner einzelnen Netzbahnen verbundenes Hagelschutznetz in einer schaubildlichen, abgebrochenen Darstellung.

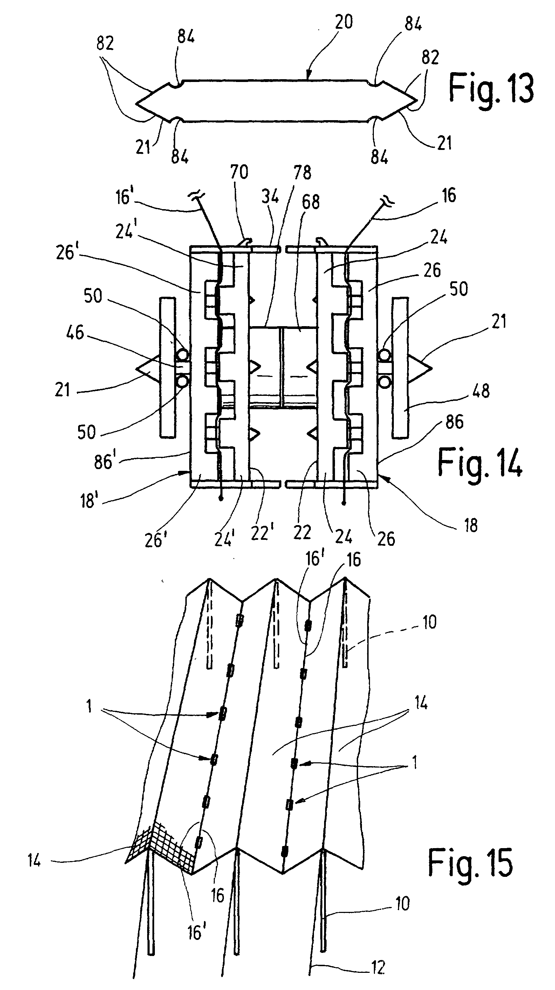

Die in der Zeichnung dargestellte Verbindungsvorrichtung 1 ist für Hagelschutznetze bestimmt, welche mehrere zur reihenweisen Abdeckung von in Reihen angeordneten Obstkulturen, insbesondere Kernobstbäumen seitlich nebeneinander über Stützstangen 10 und Spanndrähte 12 aufspannbare Netzbahnen 14 aus Kunststoffgewebe aufweisen, die an ihren längsseitig aneinander angrenzenden Netzrändern 16, 16' an im Abstand voneinander angeordneten Verbindungsstellen miteinander zu verbinden sind (Fig. 15). Die Verbindungsvorrichtung 1 besteht im wesentlichen aus einer ersten und zweiten, an jeweils einem der Netzränder 16, 16' verankerbaren Halteplatte 18, 18', und einem Verbindungsbolzen 20 zur Verbindung der Halteplatten 18, 18', welche im Verbindungszustand mit einer Breitseite (Verbindungsseite 22, 22') gegeneinander weisen. Die Halteplatten 18, 18' bestehen ihrerseits aus einem rechteckigen Lochplattenteil 24, 24' und einem mit dem Lochplattenteil unter Einklemmen bzw. Einspannen jeweils eines der zu verbindenden Netzränder 16, 16' breitseitig zusammenfügbaren Zapfenplattenteil 26, 26'.

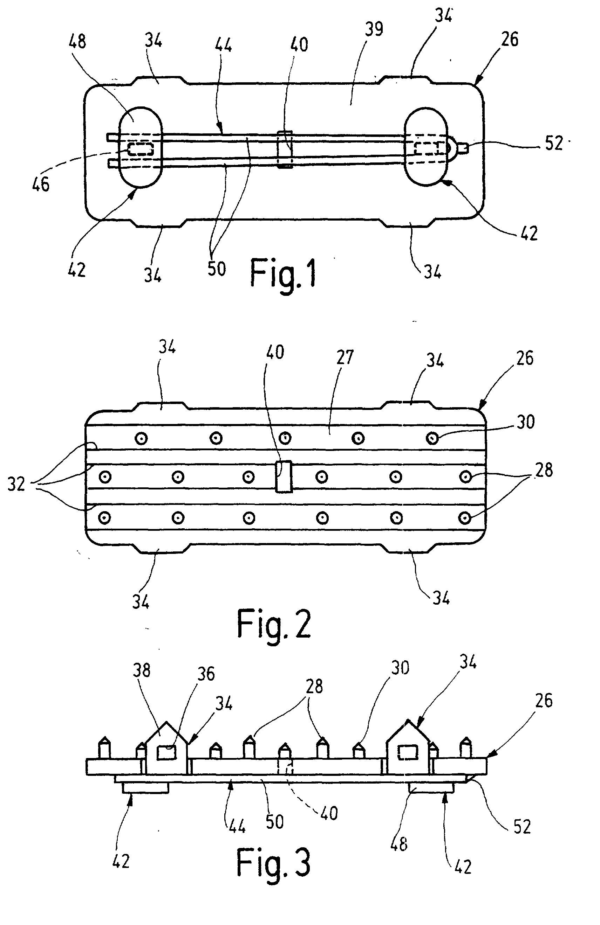

Der in Fig. 1 bis 3 gezeigte Zapfenplattenteil 26 der ersten Halteplatte 18 weist an seiner inneren Breitseite 27 senkrecht abstehende, an ihren freien Enden spitze Zapfen 28, 30 auf, die in drei Längsreihen am Grund von Längsnuten 32 im Abstand voneinander rasterartig verteilt angeordnet sind, wobei die Zapfen 30 einer randseitigen Längsreihe kürzer als die übrigen Zapfen 28 ausgebildet sind. Zur Verbindung mit dem Lochplattenteil 24 sind an den Längsrändern des Zapfenplattenteils 26 jeweils zwei im Abstand voneinander angeordnete Laschen 34 angeformt, die in Richtung der Zapfen 28, 30 über die innere Breitseite 27 überstehen. Die Laschen 34 sind mit einer Öffnung 36 versehen und besitzen an ihren freien Enden einen spitzwinklig geformten Ansatz 38.

Zur formschlüssigen Aufnahme des im Querschnitt rechteckigen Verbindungsbolzens 20 ist ein den Zapfenplattenteil 26 breitseitig mittig durchbrechender Schlitz 40 vorgesehen. Um den durch den Schlitz 40 hindurchsteckbaren Verbindungsbolzen 20 an der äußeren Breitseite 39 des Zapfenplattenteils 26 zu sichern, sind dort zwei im Abstand voneinander T-förmig abstehende Flanschstücke 42 zur Aufnahme einer als Sicherungsmittel bestimmten, langgestreckt U-förmigen Federstahl-Spreizspange 44 angeformt. Die Flanschstücke 42 weisen einen im Bereich der Längsmittelebene des Zapfenplattenteils 26 angeordneten Tragsteg 46 und einen quer zu dem Tragsteg sich erstreckenden Stützteller 48 auf, so daß die Spreizspange 44 mit ihren Rastschenkeln 50 unter beidseitiger Umgreifung der Tragstege 46 in Längsrichtung des Zapfenplattenteils 26 unter den Stütztellern 48 hindurchschiebbar ist. Zur Festlegung der Spreizspange 44 in der eingeschobenen Montagestellung ist an mindestens einem Flanschstück 42 eine im Abstand von dem Tragsteg 46 angeordnete Rastnase 52 vorgesehen.

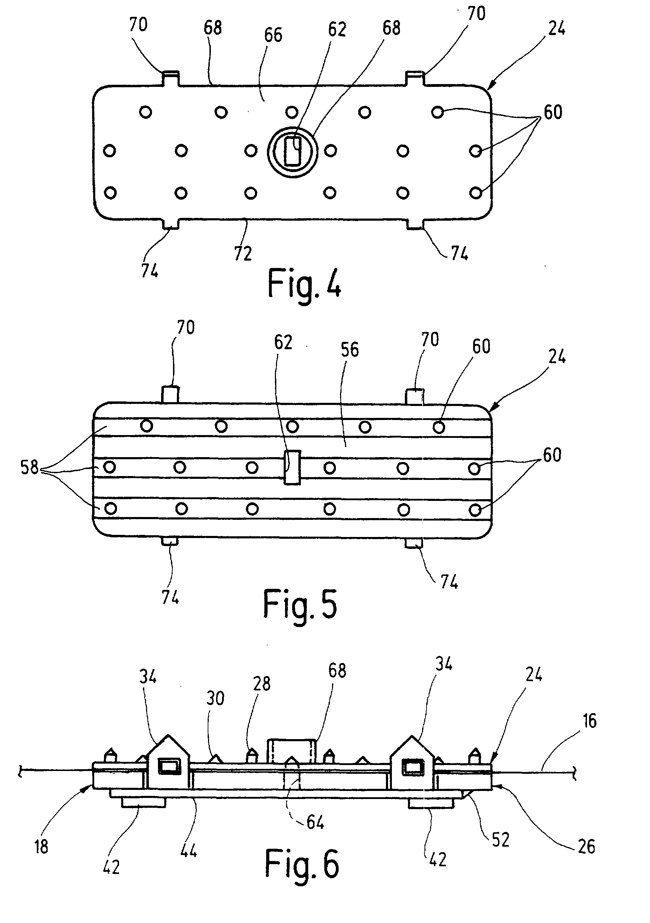

Formkomplementär zu dem Zapfenplattenteil 26 weist der in Fig. 4 und 5 dargestellte Lochplattenteil 24 der ersten Halteplatte 18 an seiner inneren Breitseite 56 überstehende, in die Nuten 32 eingreifende Verstärkungsrippen 58 sowie die Verstärkungsrippen quer durchsetzende, zur Aufnahme der Zapfen 28, 30 bestimmte Löcher 60 auf. Ein Schlitz 62 des Lochplattenteils 24 fluchtet im zusammengefügten Zustand mit dem Schlitz 40 des Zapfenplattenteils 26 und bildet mit diesem einen Querdurchbruch 64 der ersten Halteplatte 18 In Verlängerung des Querdurchbruchs 64 ist an der äußeren Breitseite 66 des Lochplattenteils 24 eine Hülse 68 koaxial zu dem Schlitz 62 angeformt. Um den Lochplattenteil 24 mit dem Zapfenplattenteil 26 fest verbinden zu können, sind an einem Längsseitenrand 68 des Lochplattenteils 24 zwei winklig abgebogene Hakenzungen 70 und an dem anderen Längsseitenrand 72 zwei den Hakenzungen 70 gegenüberliegende Rastzungen 74 angeformt. Die Hakenzungen 70 lassen sich in den Öffnungen 36 der Laschen 34 des Zapfenplattenteils 26 einhaken. Die auf diese Weise scharnierartig gelenkig miteinander verbundenen Plattenteile 24, 26 können dann gegeneinander geklappt werden, wobei die Rastzungen 74 in den zugeordneten Laschen 34 einrasten. Bei der Befestigung am Netzrand 16 greifen die Zapfen 28 , 30 und Laschen 34 durch die Netzmaschenöffnungen hindurch, während die Plattenteile 24, 26 mit ihren inneren Breitseiten 27, 56 unter Einklemmen des Netzrandes 16 gegeneinander gehalten sind (Fig. 6).

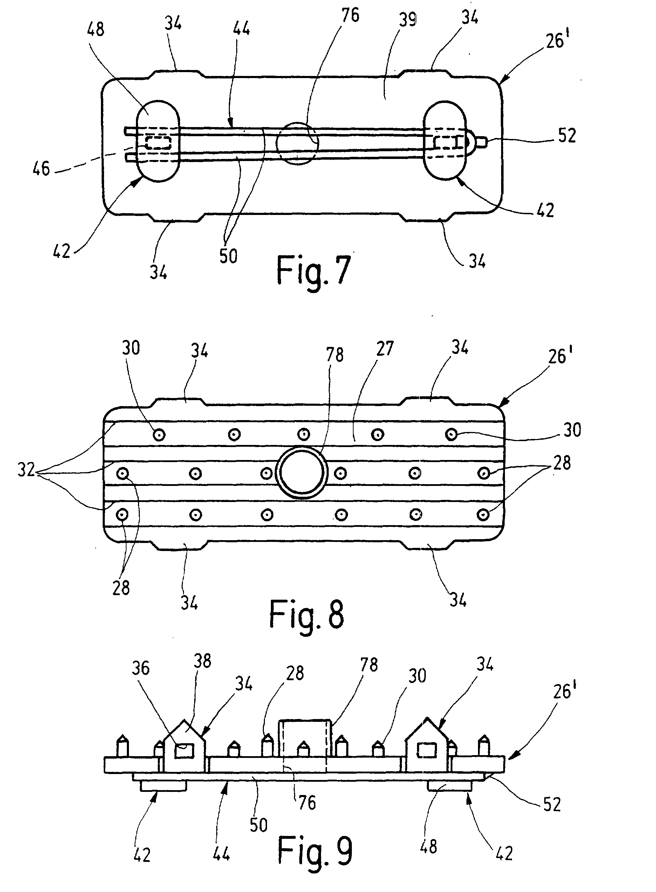

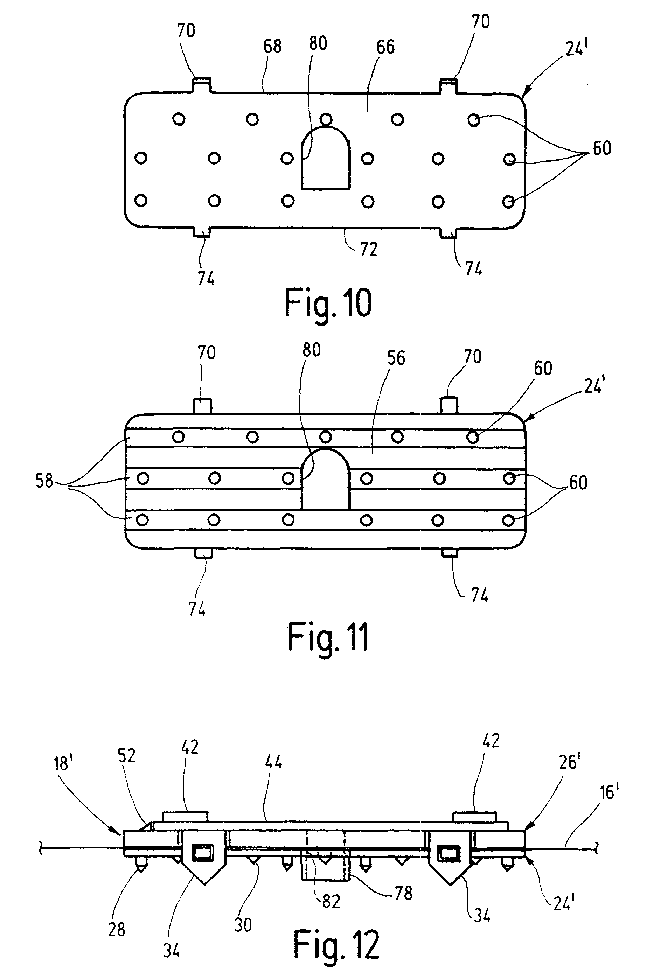

Bei der zweiten Halteplatte 18' sind der in Fig. 7 bis 9 gezeigte Zapfenplattenteil 26' und der in Fig. 10 und 11 dargestellte Lochplattenteil 24' mit Ausnahme der nachfolgend beschriebenen Drehführung für den Verbindungsbolzen 20 entsprechend dem Zapfenplattenteil 26 und dem Lochplattenteil 24 der ersten Halteplatte 18 aufgebaut. Teile gleicher Funktion, für welche die vorstehende Beschreibung sinngemäß zutrifft, sind daher mit denselben Bezugszeichen versehen. Die Zapfenplaftte 26' weist anstelle des Schlitzes 40 eine zentrale Bohrung 76 auf, deren Durchmesser der Breite des Verbindungsbolzens entspricht. An der inneren Breitseite 27 der Zapfenplatte 26' ist eine senkrecht abstehende Hülse 78 angeformt, deren lichter Querschnitt mit der Bohrung 76 fluchtet. Für den Durchgriff der Hülse 78 ist in der Lochplatte 24' eine Öffnung 80 freigespart. In dem in Fig. 12 gezeigten zusammengesetzten Zustand der Lochplatte 24' und der Zapfenplatte 26' bildet die Hülse 78 somit in Verbindung mit der Bohrung 76 einen Querdurchbruch 82 der Halteplatte 18', in dem der Verbindungsbolzen 20 um seine Längsachse drehbar geführt ist.

Der aus einem Flachmaterial vorteilhaft aus Edelstahl bestehende Verbindungsbolzen 20 weist an seinen Schmalseiten zu seinen Enden 21 hin spitzwinklig zulaufende Anlaufschrägen 82 auf, die durch Rastausnehmungen 84 hinterschnitten sind. Damit lassen sich die gegenüberliegende Randbereiche der Querdurchbrüche 64, 82 übergreifenden Rastschenkel 50 der Spreizspangen 44 beim Durchstecken des Verbindungsbolzens 20 gegeneinander aufspreizen und in die Rastausnehmungen 84 einrasten.

Im folgenden wird die Montage der Halteplatten 18, 18' und deren Verbindung mittels des Verbindungsbolzens sowie das Lösen der Verbindung im einzelnen beschrieben. Zunächst werden die Spreizspangen 44 in der bereits beschriebenen Weise an den Lochplattenteilen 24, 24' vormontiert. Anschließend werden an den vorgesehenen Verbindungsstellen eines Netzrandes 16' die Halteplatten 18' befestigt. Dazu wird in einem ersten Montageschritt der Zapfenplattenteil 26' an der den Obstkulturen zugewandten Unterseite der Netzbahn 14 an dem Netzrand 16' angesetzt und die Zapfen 28, 30 und Laschen 34 sowie die Hülse 78 durch die Netzmaschenöffnungen hindurchgedrückt. Der Zapfenplattenteil 26' wird dabei mit einem Längsrand an der freien Netzkante des Netzrandes 16' ausgerichtet. Um das Durchführen der Hülse 78 durch die Maschenöffnungen zu erleichtern, kann auf diese ein nicht gezeigtes kegeliges Ansatzteil als Montagehilfe aufgesteckt werden. Anschließend wird in einem weiteren Montageschritt der Lochplattenteil 24' an der Oberseite der Netzbahn 14 mit seinen Hakenzungen 70 zweckmäßig in die von der Netzkante abgewandten Laschen 34 eingehängt. Der Lochplattenteil 24' läßt sich sodann in einer Schwenkbewegung gegen den Zapfenplattenteil 26' anklappen. Die Zapfen 28, 30 greifen dabei in die Löcher 60 ein, wobei die den Hakenzungen 70 nahen kürzeren Zapfen 30 ein ungehindertes Verschwenken erlauben. Beim Zusammendrücken der Plattenteile 24', 26' rasten die Rastzungen 74 in die zugeordneten Laschen 34 ein, so daß eine sichere Verbindung der Plattenteile 24', 26' in Form der Halteplatte 18' erreicht wird.

Nach Montage der Haltenplatten 18' erfolgt in entsprechender Weise die Netzbefestigung der Halteplatten 18 an dem Netzrand 16, wobei jedoch die an der netzabgewandten äußeren Breitseite 66 des Lochplattenteils 24 abstehende Hülse 68 nicht durch die Netzbahn 14 hindurchgeführt werden muß. Die Halteplatten 18 werden jeweils nach der Netzbefestigung sogleich in der in Fig. 14 dargestellten Anordnung mit der zugeordneten Halteplatte 18' verbunden, um den richtigen Abstand der jeweils nächsten Verbindungsstelle sicherzustellen. Hierzu wird der Verbindungsbolzen 20 von der freien Stirnseite der Hülse 68 her in den Querdurchbruch 64 der Halteplatte 18 eingeführt und an der Spreizspange 44 verrastet. Sodann werden die Halteplatten 18, 18' bei abgewinkelten Netzrändern 16, 16' mit ihren Verbindungsseiten 22, 22' parallel gegeneinander geführt. Der Verbindungsbolzen 20 wird dabei mit seinem verbleibenden freien Ende durch die Hülse 78 hindurch in den Querdurchbruch 76 der Halteplatte 18' eingeführt und an deren Spreizspange 44 verrastet. Auf diese Weise läßt sich eine zuverlässige Verbindung der Netzränder 16, 16' erreichen, wobei die im Verbindungszustand auftretenden Zugkräfte über den Verbindungsbolzen 20 an die voneinander abgewandten Breitseiten 86, 86' der Halteplatten 18, 18' abgeleitet werden.

Die Verbindung kann auf einfache Weise dadurch gelöst werden, daß die Halteplatten 18, 18' um 90° gegeneinander verdreht und in Längsrichtung des Verbindungsbolzens 20 auseinandergezogen werden, wodurch der in dem Querdurchbruch 64 der Halteplatte 18 drehfest gehaltene, in der Hülse 78 jedoch drehbar gelagerte Verbindungsbolzen 20 an der Halteplatte 18' außer Eingriff mit der Rastspange 44 kommt. Die mit ihren freien Stirnseiten auf Stoß gegeneinander anliegenden Hülsen 68, 78 bilden dabei ein Drehlager und sorgen zugleich als Abstandshalter für den erforderlichen Abstand der Halteplatten 18, 18', um so ein Verhaken der an den Verbindungsseiten 22, 22' gegeneinander überstehenden Enden der Zapfen 28, 30 und Laschen 34 zu verhindern.

Zusammenfassend ist folgendes festzuhalten: Die Erfindung betrifft eine Verbindungsvorrichtung für Hagelschutznetze, welche mehrere seitlich nebeneinander aufspannbare Netzbahnen 14 aufweisen. Zur Verbindung der Netzbahnen 14 sind an Verbindungsstellen zwei lösbar miteinander verbindbare Halteplatten 18,18' vorgesehen, die an den einander benachbarten Netzrändern 16,16' der Netzbahnen 14 verankerbar sind und jeweils aus einem Lochplattenteil 24,24' und einem mit diesem unter Einklemmen eines der zu verbindenden Netzränder 16,16' zusammenfügbaren Zapfenplattenteil 26,26' bestehen. Um eine sichere Verbindung herzustellen, ist ein Verbindungsbolzen 20 vorgesehen, der mit seinen freien Enden durch jeweils einen zentralen Querdurchbruch 64,82 der Halteplatten 18,18' hindurchsteckbar und an den voneinander abgewandten Rückseiten der Halteplatten 18,18' über Rastmittel 44 verschiebefest verrastbar ist. Dabei sind die Zapfenplattenteile 26,26' voneinander abgewandt und über an ihren Seitenrändern angeordnete Verbindungselemente 34 mit Verbindungselementen 70,74 der Lochplattenteile 24,24' verbunden.

## Patentansprüche

1. Verbindungsvorrichtung für Hagelschutznetze, welche mehrere zur reihenweisen Abdeckung von Obstkulturen seitlich nebeneinander aufspannbare Netzbahnen (14) aufweisen, mit zwei an den einander paarweise benachbarten Netzrändern (16,16') der Netzbahnen (14) verankerbaren, jeweils aus einem Lochplattenteil (24,24') und einem über breitseitig abstehende, durch Netzmaschenöffnungen hindurchgreifende Zapfen (28,30) mit dem Lochplattenteil (24,24') unter Einklemmen eines der zu verbindenden Netzränder (16,16') zusammenfügbaren Zapfenplattenteil (26,26') bestehenden Halteplatten (18,18'), die lösbar miteinander verbindbar sind und im Verbindungszustand mit einer Breitseite als Verbindungsseite (22,22') gegeneinander weisen, **gekennzeichnet durch** einen mit seinen freien Enden von der Verbindungsseite (22,22') der Halteplatten (18,18') her **durch** jeweils einen zentralen Querdurchbruch (64,82) der Halteplatten (18,18') hindurchsteckbaren Verbindungsbolzen (20), der im Verbindungszustand **durch** an den voneinander abgewandten Rückseiten (86,86') der Halteplatten (18,18') angeordnete Rastmittel (44) verschiebefest verrastet ist.

2. Vorrichtung nach Anspruch 1, **dadurch gekennzeichnet, daß** die Rastmittel durch jeweils eine an den Rückseiten (86,86') der Halteplatten (18,18') befestigbare Spreizspange (44) gebildet sind, die mit ihren beim Durchstecken des Verbindungsbolzens (20) gegeneinander aufspreizbaren Rastschenkeln (50) in Rastausnehmungen (84) des Verbindungsbolzens (20) eingreift.

3. Vorrichtung nach Anspruch 2, **dadurch gekennzeichnet, daß** die Spreizspangen (44) aus U-förmig gebogenem Federstahl-Drahtmaterial bestehen.

4. Vorrichtung nach Anspruch 2 oder 3, **dadurch gekennzeichnet, daß** die Spreizspangen (44) durch zwei an den Rückseiten (86,86') der Halteplatten (18,18') im Abstand voneinander angeformte Flanschstücke (42) gehalten sind, wobei die zwischen den Flanschstücken (42) verlaufenden Abschnitte der Rastschenkel (50) den Querdurchbruch (64,82) der Halteplatten (18,18') an gegenüberliegenden Randbereichen übergreifen.

5. Vorrichtung nach Anspruch 4, **dadurch gekennzeichnet, daß** die Flanschstücke (42) einen an der Rückseite (86,86') der Halteplatten (18,18') abstehenden Tragsteg (46) und einen in T-förmiger Anordnung quer zu dem Tragsteg (46) sich erstreckenden Stützteller (48) aufweisen, wobei die Spreizspangen (44) unter beidseitiger Umgreifung der Tragstege (46) zwischen der Rückseite (86,86') der Halteplatten (18,18') und den Stütztellern (48) einführbar sind.

6. Vorrichtung nach einem der Ansprüche 2 bis 5, **dadurch gekennzeichnet, daß** die Halteplatten (18,18') mindestens eine an ihrer Rückseite (86,86') abstehende Rastnase (52) aufweisen, welche die Spreizspange (44) an ihrem die Rastschenkel (50) verbindenden Quersteg in einer Montagestellung gegenüber einem Flanschstück (42) arretiert.

7. Vorrichtung nach einem der Ansprüche 2 bis 6, **dadurch gekennzeichnet, daß** der Verbindungsbolzen (20) zu seinen freien Enden hin vorzugsweise spitzwinklig aufeinander zulaufende Anlaufschrägen (82) aufweist, die durch die Rastausnehmungen (84) hinterschnitten sind.

8. Vorrichtung nach einem der Ansprüche 1 bis 7, **dadurch gekennzeichnet, daß** der Verbindungsbolzen (20) an einer ersten (18) der beiden Halteplatten (18,18') drehfest gehalten und an der zweiten Halteplatte (18') um seine Längsachse drehbar und dabei aus seiner Raststellung lösbar gelagert ist.

9. Vorrichtung nach einem der Ansprüche 1 bis 8, **dadurch gekennzeichnet, daß** der Verbindungsbolzen (20) aus einem vorzugsweise aus Edelstahl bestehenden Flachmaterial gebildet ist, daß die erste Halteplatte (18) einen an den Querschnitt des Verbindungsbolzens (20) angepaßten Schlitz (64) als Querdurchbruch aufweist, und daß der Querdurchbruch der zweiten Halteplatte (18') durch eine den Verbindungsbolzen (20) um seine Längsachse drehbar aufnehmende Bohrung (82) gebildet ist.

10. Vorrichtung nach Anspruch 8 oder 9, **dadurch gekennzeichnet, daß** die Halteplatten (18,18') an ihren Verbindungsseiten (22,22') überstehende, den Verbindungsbolzen (20) umgreifende Hülsen (68,78) aufweisen, die im Verbindungszustand mit ihren freien Stirnflächen auf Stoß gegeneinander anliegen.

11. Vorrichtung nach Anspruch 10, **dadurch gekennzeichnet, daß** die Hülse (78) an der zweiten Halteplatte (18') als Drehführung für den Verbindungsbolzen (20) den Querdurchbruch (82) begrenzt.

12. Vorrichtung nach einem der Ansprüche 1 bis 11, **dadurch gekennzeichnet, daß** der Lochplattenteil (24,24') und der Zapfenplattenteil (26,26') der Halteplatten (18,18') als einstückige Formteile aus Kunststoff ausgebildet sind.

13. Vorrichtung nach einem der Ansprüche 1 bis 12, **dadurch gekennzeichnet, daß** die Lochplattenteile (24,24') und Zapfenplattenteile (26,26') der Halteplatten (18,18') über an ihren Seitenrändern angeordnete, paarweise einander zugeordnete Verbindungselemente (70,74;34) miteinander verbindbar sind, wobei die Verbindungselemente an einem Seitenrand als Scharnierverbindung gelenkig miteinander verbindbar sind und an dem gegenüberliegenden Seitenrand als Rastverbindung miteinander verrastbar sind.

14. Vorrichtung nach Anspruch 13, **dadurch gekennzeichnet, daß** die Verbindungselemente durch Laschen (34) und in Öffnungen (36) der Laschen (34) eingreifende Hakenzungen (70) und Rastzungen (74) gebildet sind.

15. Vorrichtung nach Anspruch 13 oder 14, **dadurch gekennzeichnet, daß** die Laschen (34) in Richtung der Zapfen (28,30) an den Zapfenplattenteilen (26,26') überstehen und zu ihren freien Enden hin spitzwinklig zulaufende Ansätze (38) aufweisen.

16. Vorrichtung nach einem der Ansprüche 13 bis 15, **dadurch gekennzeichnet, daß** die Verbindungselemente (70,74;34) an den Längsseitenrändern der im Umriß rechteckigen Lochplattenteile (24,24') und Zapfenplattenteile (26,26') im Abstand voneinander angeordnet sind.

17. Vorrichtung nach einem der Ansprüche 13 bis 16, **dadurch gekennzeichnet, daß** die Zapfen (28,30) über die Breitseite des Zapfenplattenteils (26,26') vorzugsweise reihenweise rasterartig verteilt angeordnet sind, und daß die Zapfen (30) im Bereich des die Scharnierverbindung tragenden Seitenrandes gegenüber den übrigen Zapfen (28) verkürzt ausgebildet sind.

18. Vorrichtung nach einem der vorhergehenden Ansprüche, **dadurch gekennzeichnet, daß** die Zapfenplattenteile (26,26') im Verbindungszustand der Halteplatten (18,18') voneinander abgewandt sind.

19. Hagelschutznetz mit mehreren zur reihenweisen Abdeckung von Obstkulturen seitlich nebeneinander an einem Stützgerüst (10,12) aufspannbaren Netzbahnen (14), die an ihren aneinander angrenzenden Netzrändern (16,16') im Abstand voneinander angeordnete Verbindungsstellen aufweisen, **gekennzeichnet durch** an den Verbindungsstellen angeordnete Verbindungsvorrichtungen (1) nach einem der vorhergehenden Ansprüche.

## Claims

1. Connecting device for hail protection nets, which have several net sections (14) which can be mounted laterally alongside each other to cover fruit crops in rows, with two retaining plates (18, 18') which can be anchored to the net edges (16, 16'), mutually adjacent in pairs, of the net sections (14) and consist in each case of a perforated plate part (24, 24') and a peg plate part (26, 26') which can be joined to the perforated plate part (24, 24') via pegs (28, 30) which project on the wide side and pass through net mesh openings, thereby clamping one of the net edges (16, 16') to be connected, which retaining plates can be detachably connected together and in the connected state face each other with a wide side as connection side (22, 22'), **characterized by** a connecting bolt (20) which can be inserted through a central transverse opening (64, 82) in each case of the retaining plates (18, 18') with its free ends from the connection side (22, 22') of the retaining plates (18, 18'), which connecting bolt is latched, in the connected state, in movement-resistant manner by latching means (44) arranged on the rear sides (86, 86'), which face away from each other, of the retaining plates (18, 18').

2. Device according to Claim 1, **characterized in that** the latching means are formed by a straddling clasp (44) which can be fixed in each case to the rear sides (86, 86') of the retaining plates (18, 18'), which clasp engages in latching recesses (84) of the connecting bolt (20) with its latching legs (50) which can spread out against each other on insertion of the connecting bolt (20).

3. Device according to Claim 2, **characterized in that** the straddling clasps (44) consist of spring steel wire material bent in a U-shape.

4. Device according to Claim 2 or 3, **characterized in that** the straddling clasps (44) are held by two flange pieces (42) moulded onto the rear sides (86, 86') of the retaining plates (18, 18') at a distance from each other, the sections of the latching legs (50) running between the flange pieces (42) overlapping the transverse opening (64, 82) of the retaining plates (18, 18') at opposite edge regions.

5. Device according to Claim 4, **characterized in that** the flange pieces (42) have a carrying web (46) projecting at the rear side (86, 86') of the retaining plates (18, 18') and a support plate (48) extending transverse to the carrying web (46) in T-shaped arrangement, it being possible to insert the straddling'clasps (44) between the rear side (86, 86') of the retaining plates (18, 18') and the support plates (48), thereby encompassing the carrying webs (46) on both sides.

6. Device according to one of Claims 2 to 5, **characterized in that** the retaining plates (18, 18') have at least one latching nose (52) projecting at their rear side (86, 86'), which latching nose locks the straddling clasp (44) on its transverse web connecting the latching legs (50) in an assembly position opposite a flange piece (42).

7. Device according to one of Claims 2 to 6, **characterized in that** towards its free ends the connecting bolt (20) preferably has starting inclinations (82) running towards each other at an acute angle, which are undercut by the latching recesses (84).

8. Device according to one of Claims 1 to 7, **characterized in that** the connecting bolt (20) is held on a first (18) of the two retaining plates (18, 18') in rotation-resistant manner and is mounted on the second retaining plate (18') so that it can rotate about its longitudinal axis and thereby be detached from its latching position.

9. Device according to one of Claims 1 to 8, **characterized in that** the connecting bolt (20) is formed from a flat material preferably consisting of special steel, **in that** the first retaining plate (18) has as transverse opening a slot (64) matched to the cross-section of the connecting bolt (20) and **in that** the transverse opening of the second retaining plate (18') is formed by a bore (82) which receives the connecting bolt (20) so that it can rotate about its longitudinal axis.

10. Device according to Claim 8 or 9, **characterized in that** the retaining plates (18, 18') have sleeves (68, 78) projecting at their connecting sides (22, 22') and encompassing the connecting bolt (20), which sleeves rest against each other in abutting manner with their free front faces in the connected state.

11. Device according to Claim 10, **characterized in that** the sleeve (78) on the second retaining plate (18') limits the transverse opening (82) as rotary guide for the connecting bolt (20).

12. Device according to one of Claims 1 to 11, **characterized in that** the perforated plate part (24, 24') and the peg plate part (26, 26') of the retaining plates (18, 18') are formed as one-piece mouldings of plastic.

13. Device according to one of Claims 1 to 12, **characterized in that** the perforated plate parts (24, 24') and peg plate parts (26, 26') of the retaining plates (18, 18') can be connected together via connecting elements (70, 74; 34) arranged on their side edges and assigned to each other in pairs, the connecting elements being connectable together in articulated manner at one side edge as hinge connection and latchable together as latching connection at the opposite side edge.

14. Device according to Claim 13, **characterized in that** the connecting elements are formed by shackles (34) and hook tongues (70) and latching tongues (74) engaging in openings (36) of the shackles (34).

15. Device according to Claim 13 or 14, **characterized in that** the shackles (34) project at the peg plate parts (26, 26') in the direction of the pegs (28, 30) and have shoulders (38) terminating in an acute angle towards their free ends.

16. Device according to one of Claims 13 to 15, **characterized in that** the connecting elements (70, 74; 34) are arranged at a distance from each other on the longitudinal side edges of the perforated plate parts (24, 24') and peg plate parts (26, 26') which are rectangular in contour.

17. Device according to one of Claims 13 to 16, **characterized in that** over the wide side of the peg plate part (26, 26') the pegs (28, 30) are arranged preferably in rows and distributed in grid-like manner and **in that** in the region of the side edge bearing the hinge connection the pegs (30) are formed in shortened manner compared with the remaining pegs (28).

18. Device according to one of the preceding Claims, **characterized in that** the peg plate parts (26, 26') face away from each other in the connected state of the retaining plates (18, 18').

19. Hail protection net with several net sections (14) which can be mounted laterally alongside each other on a support frame (10, 12) to cover fruit crops in rows, which net sections have connecting points arranged at a distance from each other on their adjoining net edges (16, 16'), **characterized by** connecting devices (1) according to one of the preceding Claims arranged at the connecting points.

## Revendications

1. Dispositif de liaison pour filets de protection contre la grêle qui présentent plusieurs bandes de filet (14) pouvant être tendues côte à côte pour recouvrir rangée par rangée des cultures fruitières, comprenant deux plaquettes de fixation (18, 18') pouvant être fixées aux deux bords adjacents (16, 16') des bandes de filet (14) et composées chacune d'une partie de plaquette perforée (24, 24') et d'une partie de plaquette à tenons (26, 26') pouvant être assemblée avec la partie de plaquette perforée (24, 24') à l'aide de tenons (28, 30) faisant saillie du grand côté et passant à travers des mailles du filet, en coinçant l'un des bords du filet à assembler (16, 16'), lesquelles plaquettes sont assemblées de manière amovible et, à l'état assemblé, tournent l'une vers l'autre un grand côté en tant que côté de liaison (22, 22'), **caractérisé par** un boulon dei liaison (20) pouvant être enfoncé avec ses extrémités libres, depuis le côté de liaison (22, 22') des plaquettes de fixation (18, 18'), à travers une ouverture transversale centrale (64, 82) des plaquettes de fixation (18, 18'), et qui, lorsque le tout est assemblé, est immobilisé par des moyens d'enclenchement (44) disposés sur les faces arrière (86, 86') opposées l'une à l'autre des plaquettes de fixation (18, 18').

2. Dispositif selon la revendication 1, **caractérisé en ce que** les moyens d'enclenchement sont chacun formés par une boucle (44) pouvant être fixée sur les faces arrière (86, 86') des plaquettes de fixation (18, 18'), dont les ailes d'enclenchement (50) pouvant être écartées l'une de l'autre en enfonçant le boulon de liaison (20) se mettent en prise avec des encoches (84) du boulon de liaison (20).

3. Dispositif selon la revendication 2, **caractérisé en ce que** les boucles (44) sont composées d'un fil en acier à ressort courbé en U.

4. Dispositif selon la revendication 2 ou 3, **caractérisé en ce que** les boucles (44) sont maintenues par deux brides (42) ménagées de façon espacée sur les faces arrière (86, 86') des plaquettes de fixation (18, 18'), sachant que les segments des ailes d'enclenchement (50) s'étendant entre les brides (42) passent par-dessus l'ouverture transversale (64, 82) des plaquettes de fixation (18, 18') au niveau de zones du bord opposées.

5. Dispositif selon la revendication 4, **caractérisé en ce que** les brides (42) comportent une nervure de support (46) faisant saillie de la face arrière (86, 86') des plaquettes de fixation (18, 18') et un disque d'appui (48) s'étendant perpendiculairement à la nervure de support (46) et disposé en T, sachant que les boucles (44) peuvent être introduites entre la face arrière (86, 86') des plaquettes de fixation (18, 18') et les disques d'appui (48) en enserrant de part et d'autre les nervures de support (46).

6. Dispositif selon l'une des revendications 2 à 5, **caractérisé en ce que** les plaquettes de fixation (18, 18') présentent au moins une saillie d'enclenchement (52) faisant saillie de la face arrière (86, 86'), qui bloque la boucle (44) dans une position de montage par rapport à une bride (42), au niveau de son entretoise reliant les ailes d'enclenchement (50).

7. Dispositif selon l'une des revendications 2 à 6, **caractérisé en ce que** le boulon de liaison (20) présente vers ses extrémités libres des surfaces obliques (82) convergeant de préférence en formant un angle aigu, surfaces par rapport auxquelles les encoches (84) sont en contredépouille.

8. Dispositif selon l'une des revendications 1 à 7, **caractérisé en ce que** le boulon de liaison (20) est monté de manière fixe en rotation sur une première (18) des deux plaquettes de fixation (18, 18') et de manière à tourner autour de son axe longitudinal, et donc à quitter sa position enclenchée, sur la seconde plaquette de fixation (18').

9. Dispositif selon l'une des revendications 1 à 8, **caractérisé en ce que** le boulon de liaison (20) est formé à partir d'un matériau plat composé de préférence d'acier surfin, **en ce que** la première plaquette de fixation (18) présente en tant qu'ouverture transversale une fente (64) adaptée à la section transversale du boulon de liaison (20), et **en ce que** l'ouverture transversale de la seconde plaquette de fixation (18') est formée par un perçage (82) recevant le boulon de liaison (20) de manière à ce qu'il tourne autour de son axe longitudinal.

10. Dispositif selon la revendication 8 ou 9, **caractérisé en ce que** les plaquettes de fixation (18, 18') présentent sur leurs côtés de liaison (22, 22') des douilles (68, 78) saillantes entourant le boulon de liaison (20), qui, à l'état assemblé, sont appliquées l'une contre l'autre avec leurs surfaces frontales libres.

11. Dispositif selon la revendication 10, **caractérisé en ce que** la douille (78) sur la seconde plaquette de fixation (18') délimite l'ouverture transversale (82) en tant que guide de rotation pour le boulon de liaison (20).

12. Dispositif selon l'une des revendications 1 à 11, **caractérisé en ce que** la partie de plaquette perforée (24, 24') et la partie de plaquette à tenons (26, 26') des plaquettes de fixation (18, 18') sont réalisées en tant que pièces moulées d'un seul tenant en matière plastique.

13. Dispositif selon l'une des revendications 1 à 12, **caractérisé en ce que** les parties de plaquette perforées (24, 24') et les parties de plaquette à tenons (26, 26') des plaquettes de fixation (18, 18') peuvent être assemblées par l'intermédiaire d'éléments de liaison (70, 74 ; 34) associés deux à deux et disposés sur les bords latéraux des plaquettes, sachant que les éléments de liaison peuvent être reliés entre eux de manière articulée en tant que charnière au niveau d'un bord latéral et être immobilisés par une liaison par enclenchement au niveau du bord latéral opposé.

14. Dispositif selon la revendication 13, **caractérisé en ce que** les éléments de liaison sont formés par des pattes (34) et par des languettes crochues (70) et des languettes d'enclenchement (74) se mettant en prise avec des ouvertures (36) des pattes (34).

15. Dispositif selon la revendication 13 ou 14, **caractérisé en ce que** les pattes (34) font saillie en direction des tenons (28, 30) sur les parties de plaquette à tenons (26, 26') et présentent des prolongements (38) convergeant en formant un angle aigu en direction de leurs extrémités libres.

16. Dispositif selon l'une des revendications 13 à 15, **caractérisé en ce que** les éléments de liaison (70, 74 ; 34) sont disposés de façon espacée les uns des autres sur les bords longitudinaux des parties de plaquette perforées (24, 24') et des parties de plaquette à tenons (26, 26') aux contours rectangulaires.

17. Dispositif selon l'une des revendications 13 à 16, **caractérisé en ce que** les tenons (28, 30) sont disposés de préférence en rangées, en étant répartis à la manière d'un quadrillage sur le grand côté de la partie de plaquette à tenons (26, 26'), et **en ce que**, dans la zone du bord latéral portant la charnière, les tenons (30) sont plus courts que les autres tenons (28).

18. Dispositif selon l'une des revendications précedentes, **caractérisé en ce que** les parties de plaquette à tenons (26, 26') sont opposées l'une à l'autre lorsque les plaquettes de fixation (18, 18') sont assemblées.

19. Filet de protection contre la grêle pour recouvrir rangée par rangée des cultures fruitières, comprenant plusieurs bandes de filet (14) pouvant être tendues côte à côte sur une armature de support (10, 12), qui présentent sur les bords adjacents (16, 16') des filets des points de liaison espacés les uns des autres, **caractérisé par** des dispositifs de liaison (1) situés aux points de liaison, selon l'une des revendications précédentes.
